# EUROPÄISCHE PATENTSCHRIFT

(11) **EP 2 160 228 B1**
(45) Veröffentlichungstag und Bekanntmachung des Hinweises auf die Patenterteilung: **29.05.2013**
(21) Anmeldenummer: 08749105.6
(22) Anmeldetag: 24.04.2008
(51) Int. Cl.: B01D 39/16, A62D 5/00, B01J 20/20, B01J 20/28, B01J 20/32, B01D 39/08, B01D 39/20

(54) **ADSORPTIONSFILTERMATERIAL MIT INTEGRIERTER PARTIKEL- UND/ODER AEROSOLFILTERFUNKTION SOWIE SEINE VERWENDUNG**
ADSORPTION FILTER MATERIAL WITH INTEGRATED PARTICLE- AND/OR AEROSOL-FILTERING FUNCTION AND ITS USE
MATÉRIAU DE FILTRATION PAR ADSORPTION À FONCTION INTÉGRÉE DE FILTRATION DE PARTICULES ET/OU D'AÉROSOLS, ET SON UTILISATION

(30) Priorität: 11.06.2007 DE 102007027399; 13.07.2007 DE 102007033178
(43) Veröffentlichungstag der Anmeldung: 10.03.2010
(73) Patentinhaber: Blücher GmbH, 40699 Erkrath (DE)
(72) Erfinder: BÖHRINGER, Bertram, 42115 Wuppertal (DE); KÄMPER, Stefan, 40878 Ratingen (DE)
(74) Vertreter: Von Rohr
(86) Internationale Anmeldenummer: PCT/EP2008/003306
(87) Internationale Veröffentlichungsnummer: WO 2008/151692

(56) Entgegenhaltungen:
- EP-A- 1 433 394
- EP-A- 1 618 938
- DE-A1-102005 056 537
- DE-A1-102006 021 905
- US-B2- 6 641 773

## Beschreibung

Die vorliegende Erfindung betrifft ein Adsorptionsfiltermaterial mit integriertem Partikel- und/oder Aerosolschutz und mit Schutzfunktion gegenüber biologischen und/oder chemischen Schadstoffen, insbesondere biologischen und/oder chemischen Kampfstoffen sowie dessen Verwendung, insbesondere zur Herstellung von Schutzmaterialien aller Art, insbesondere ABC-Schutzbekleidung, sowie von Filtern und Filtermaterialien aller Art. Des weiteren betrifft die vorliegende Erfindung die unter Verwendung des erfindungsgemäßen Adsorptionsfiltermaterials hergestellten Schutzmaterialien, insbesondere Schutzbekleidung (z. B. ABC-Schutzbekleidungsstücke), sowie Filter und Filtermaterialien selbst.

Es gibt eine Reihe von Stoffen, die von der Haut aufgenommen werden und zu schweren körperlichen Schäden führen. Als Beispiel seien das blasenziehende Lost (synonym als Gelbkreuz bzw. Senfgas bezeichnet) und das Nervengift Sarin erwähnt. Menschen, die mit solchen Giften in Kontakt kommen können, müssen einen geeigneten Schutzanzug tragen bzw. durch geeignete Schutzmaterialien gegen diese Gifte geschützt werden.

Grundsätzlich gibt es drei Typen von Schutzanzügen: Zum einen die luft- und wasserdampfundurchlässigen Schutzanzüge, die mit einer für biologische und chemische Gifte undurchlässigen Gummischicht ausgestattet sind und sehr schnell zu einem Hitzestau beim Träger führen, weiterhin Schutzanzüge, die mit einer Membran, welche zwar Wasserdampf, aber nicht biologische und chemische Gifte hindurchläßt, ausgestattet sind und schließlich die luft- und wasserdampfdurchlässigen Schutzanzüge, die den höchsten Tragekomfort bieten.

ABC-Schutzkleidung wird also traditionell entweder aus impermeablen Systemen (z. B. Anzügen aus Butylkautschuk oder Anzügen mit Membran) oder permeablen, luftdurchlässigen adsorptiven Filtersystemen insbesondere auf Basis von Aktivkohle (z. B. Pulverkohle, Aktivkohlefaserstoffe oder Kugelkohle etc.) hergestellt.

Während die luftundurchlässigen Membrananzüge zum einen zu einem relativ guten Schutz gegen chemische und biologische Gifte, wie Kampfstoffe oder dergleichen, führen und zum anderen infolge der Luftundurchlässigkeit bzw. Impermeabilität der Membran auch eine Schutzfunktion gegenüber Aerosolen und Schadstoffpartikeln besitzen, besitzen die permeablen, luftdurchlässigen, adsorptiv wirkenden Schutzanzüge zwar eine sehr gute Schutzwirkung in bezug auf chemische Gifte, welche aber oftmals nur unzureichend in bezug auf Aerosole und Schadstoffpartikel ist.

Zur Verbesserung der biologischen Schutzfunktion werden die permeablen, adsorptiven Filtersysteme, insbesondere auf Basis von Aktivkohle, oft mit einer katalytisch aktiven Komponente bzw. einem Katalysator ausgerüstet, indem die Aktivkohle mit einem biozid bzw. biostatisch wirkenden Katalysator, insbesondere auf Basis von Metallen oder Metallverbindungen, imprägniert wird. Jedoch kann hierdurch dem Problem der mangelnden Schutzfunktion gegenüber schädigenden Aerosolen (z. B. feinverteilt ausgebrachte chemische Schadstoffe, insbesondere Kampfstoffe) oder schädigenden Partikeln (z. B. schädigende Mikroorganismen oder an Trägerpartikeln fixierte Mikroorganismen, z. B. als biologische Kampfstoffe eingesetzte Viren oder Bakterien) nicht begegnet werden.

Es ist daher die Aufgabe der vorliegenden Erfindung, ein Adsorptionsfiltermaterial bzw. ein Schutzmaterial bereitzustellen, welches die zuvor geschilderten Nachteile des Standes des Technik zumindest weitgehend vermeidet oder aber wenigstens abschwächt. Insbesondere sollte sich ein solches Adsorptionsfilter- bzw. Schutzmaterial insbesondere für die Herstellung von ABC-Schutzmaterialien aller Art, wie z. B. ABC-Schutzbekleidung und dergleichen, sowie von Filter und Filtermaterialien eignen.

Eine weitere Aufgabe der vorliegenden Erfindung liegt darin, ein permeables, insbesondere gas- bzw. luftdurchlässiges Adsorptionsfilter- bzw. Schutzmaterial bereitzustellen, welches einerseits in bezug auf chemische und/oder biologische Gifte bzw. Schadstoffe, insbesondere chemische Kampfstoffe, eine wirksame Schutzfunktion entfaltet und andererseits auch einen Schutz gegenüber schädlichen Partikeln und/oder Aerosolen bereitstellt.

Insbesondere liegt eine Aufgabe der vorliegenden Erfindung darin, das in der Patentanmeldung EP 1825 899 A1 (Stand der Technik nach Art-54(3) EPU) beschriebene Adsorptionsfiltermaterial mit integriertem Partikel- und/oder Aerosolschutz und mit Schutzfunktion gegenüber biologischen und/oder chemischen Schadstoffen weiterzubilden.

Das zuvor geschilderte Problem wird im Rahmen der vorliegenden Erfindung durch ein Adsorptionsfiltermaterial nach Patentanspruch 1 gelöst. Weitere, vorteilhafte Ausgestaltungen des erfindungsgemäßen Adsorptionsfiltermaterials sind Gegenstand der diesbezüglichen Unteransprüche.

Weiterer Gegenstand der vorliegenden Erfindung sind die Verwendung des erfindungsgemäßen Adsorptionsfiltermaterials zur Herstellung von Schutzmaterialien aller Art, insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, und von Schutzabdeckungen aller Art, vorzugsweise für den ABC-Einsatz, sowie die auf diese Weise hergestellten Schutzmaterialien der vorgenannten Art selbst.

Schließlich sind ein weiterer Gegenstand der vorliegenden Erfindung die Verwendung des erfindungsgemäßen Adsorptionsfiltermaterials zur Herstellung von Filtern und Filtermaterialien aller Art, insbesondere zur Entfernung von Schad-, Geruchs- und Giftstoffen aller Art, insbesondere aus Luft-und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich, sowie die auf diese Weise hergestellten Filter und Filtermaterialien der vorgenannten Art selbst.

Gegenstand der vorliegenden Erfindung - gemäß einem ersten Aspekt der vorliegenden Erfindung - ist somit ein Adsorptionsfiltermaterial mit integriertem Partikel- und/oder Aerosolschutz (d. h. mit integrierter Partikel- und/oder Aerosolfilterfunktion) und mit Schutzfunktion gegenüber biologischen und/oder chemischen Schadstoffen, insbesondere biologischen und/oder chemischen Kampfstoffen, gemäß Anspruch 1

Die Anmelderin hat überraschenderweise herausgefunden, daß sich auf diese Weise der Aerosol- und Partikelschutz wirksam verbessern bzw. optimieren läßt.

Auf diese Weise kann eine wirksame Steigerung bzw. Verbesserung des Aerosol- und Partikelschutzes adsorptiver Filtersysteme, insbesondere solcher auf Basis von mit Aktivkohle vorzugsweise in Teilchenform beaufschlagten Textilmaterialen, erreicht werden. Wie nachfolgend noch im Detail beschrieben, halten derart ausgebildete Filtersysteme bzw. Filtermaterialien zuverlässig und effizient beispielsweise Aerosole von Ölen, Salze, Stäube etc. mit einer Effizienz von über 90 %, vorzugsweise 99 % und mehr, zurück.

Im allgemeinen ist die Partikel- und/oder Aerosolfilterschicht unmittelbar auf der Adsorptionsschicht angeordnet, insbesondere auf bzw. an der Adsorptionsschicht fixiert, vorzugsweise hierauf laminiert. D. h. mit anderen Worten ist die Partikel- und/oder Aerosolfilterschicht im allgemeinen zwischen der Adsorptionsschicht und der Abdeckschicht (d. h. der im Gebrauchszustand äußeren Schicht bzw. Außenschicht, z. B. ein Oberstoff) angeordnet, d. h. die Partikel- und/oder Aerosolfilterschicht ist im allgemeinen auf der der Trägerschicht abgewandten Seite der Adsorptionsschicht angeordnet, wobei üblicherweise die Partikel- und/oder Aerosolfilterschicht unmittelbar auf bzw. an der Adsorptionsschicht fixiert ist (z. B. durch Laminierung oder durch vorzugsweise diskontinuierliches Verkleben, bevorzugt durch Laminierung), vorzugsweise mittels Laminierung, oder aber alternativ die Partikel- und/oder Aerosolfilterschicht auf bzw. an der Abdeckschicht oder aber auf bzw. an der Abdeck- und der Adsorptionsschicht fixiert sein (z. B. durch Laminierung oder durch vorzugsweise diskontinuierliches Verkleben, bevorzugt durch Laminierung). Im Gebrauchszustand des erfindungsgemäßen Adsorptionsfiltermaterials ist die Abdeckschicht als Außenschicht (z. B. Oberstoff) der Schadstoffseite zugewandt, so daß der schadstoffhaltige, zu dekontaminierende Strom von beispielsweise biologischen und/oder chemischen Kampfstoffen zunächst durch die Abdeckschicht hindurchtritt, dann auf die Partikel-und/oder Aerosolfilterschicht trifft, von der Partikel und/oder Aerosole zurückgehalten werden, und dann die noch im Strom verbleibenden chemischen und/oder biologischen Schadstoffe, insbesondere Kampfstoffe, auf die nachfolgende Adsorptionsschicht treffen, von der sie dann adsorbiert und unschädlich gemacht werden.

Wie zuvor beschrieben, ist die Partikel- und/oder Aerosolfilterschicht vorteilhafterweise unmittelbar auf bzw. an der Adsorptionsschicht fixiert ist (z. B. durch Laminierung oder durch vorzugsweise diskontinuierliches Verkleben, bevorzugt durch Laminierung). Alternativ kann die Partikel- und/oder Aerosolfilterschicht aber auch auf bzw. an der Abdeckschicht oder aber auf bzw. an der Abdeck- und der Adsorptionsschicht fixiert sein (z. B. durch Laminierung oder durch vorzugsweise diskontinuierliches Verkleben, bevorzugt durch Laminierung).

Aufgrund des vorgenannten mehrschichtigen Aufbaus kombiniert das erfindungsgemäße Adsorptionsfiltermaterial in einem einzigen Material sowohl einen effizienten Partikel- und/oder Aerosolschutz als auch einen effizienten Schutz gegenüber biologischen und/oder chemischen Schadstoffen, insbesondere biologischen und/oder chemischen Kampfstoffen.

Die Schutzfunktion des erfindungsgemäßen Adsorptionsfiltermaterials gegenüber Partikeln und Aerosolen ist vergleichbar mit herkömmlichen Membransystemen; jedoch ist aufgrund der Gasdurchlässigkeit, insbesondere Luftdurchlässigkeit, bzw. Permeabilität des erfindungsgemäßen Adsorptionsfiltermaterials der Tragekomfort bei der Verarbeitung zu ABC-Schutzanzügen im Vergleich zu Membrananzügen deutlich erhöht.

Was die Partikel- und/oder Aerosolfilterschicht anbelangt, so ist diese im allgemeinen als ein luftdurchlässiges textiles Flächengebilde auf Basis eines Geleges oder Textilverbundstoffs, insbesondere Vlieses (Non-Woven), besonders bevorzugt als ein Vlies (Non-Woven), ausgebildet. Erfindungsgemäß ist die Partikel- und/oder Aerosolfilterschicht durch Elektrospinnen, Meltblow-Verfahren oder eine Kombination dieser beiden Verfahren hergestellt; denn in unerwarteter Weise lassen sich mit solchen Materialien die besten Ergebnisse in bezug auf den Aerosol- und Partikelschutz bei gleichzeitig guter Luftdurchlässigkeit und geringem Flächengewicht erreichen.

Der Begriff der Vliese bzw. Vliesstoffe - synonym auch als Non-Wovens bezeichnet - wird im Rahmen der vorliegenden Erfindung insbesondere als Bezeichnung für zu den Textilverbundstoffen zählende, flexible, poröse Flächengebilde verwendet, die nicht durch die klassischen Methoden der Gewebebindung von Kette und Schuß oder durch Maschenbildung, sondern durch Verschlingung und/oder kohäsive und/oder adhäsive Verbindungen von Textilfasern hergestellt sind. Vliese sind im allgemeinen lockere Materialien aus Spinnfasern oder Filamenten, insbesondere aus synthetischen Fasern bzw. Chemiefasern (z. B. Polypropylen, Polyester, Viskose etc.) hergestellt, deren Zusammenhalt im allgemeinen durch die den Fasern eigene Haftung gegeben ist. Hierbei können die Einzelfasern eine Vorzugsrichtung aufweisen (sogenannte orientierte oder Kreuzlage-Vliese) oder aber auch ungerichtet sein (sogenannte Wirr-Vliese). Die Vliese können mechanisch verfestigt werden durch Vernadeln, Vermaschen oder durch Verwirbeln mittels scharfer Wasserstrahlen (sogenannte Spunlaced-Vliese). Erfindungsgemäß besonders geeignete Vliese werden durch Meltblow-Verfahren und bevorzugt durch Elektrospinning (vgl. z. B. US 6 641 773 B2) hergestellt. Adhäsiv verfestigte Vliese entstehen durch Verkleben der Fasern mit flüssigen Bindemitteln (z. B. Acrylatpolymere, SBR/NBA, Polyvinylester oder Polyurethandispersionen) oder durch Schmelzen bzw. Auflösen von sogenannten Bindefasern, die dem Vlies bei der Herstellung beigemischt werden. Bei der kohäsiven Verfestigung werden die Faseroberflächen durch geeignete Chemikalien angelöst und durch Druck verbunden oder bei erhöhter Temperatur verschweißt. Vliese aus sogenannten Spinnvliesen, d. h. durch Erspinnen und anschließendes Ablegen, Aufblasen oder Aufschwämmen auf ein Transportband hergestellte Flächengebilde, nennt man Spinnvliesstoffe (Englisch: Spunbondeds). Zusätzliche Fäden, Gewebe oder Gewirke enthaltende Vliese gelten als verstärkte Vliesstoffe. Aufgrund der Vielzahl zur Verfügung stehender Rohstoffe, Kombinationsmöglichkeiten und Verbesserungstechniken lassen sich Vliese bzw. Vliesstoffe mit beliebigen, zweckspezifischen Eigenschaften gezielt herstellen. Wie alle Textilien lassen sich auch Vliesstoffe bzw. Vliese den Prozessen der Textilveredlung unterziehen. Für weitergehende Einzelheiten zum Begriff der Vliese und der Vliesstoffe kann beispielsweise verwiesen werden auf Römpp Chemielexikon, 10. Auflage, Georg Thieme Verlag Stuttgan/New York, Band 6, 1999, Seiten 4889/4890, Stichwort: "Vliesstoffe".

Die Partikel- und/oder Aerosolfilterschicht ist als ein aus Textilfasern bestehendes textiles Flächengebilde mit durch die Textilfasern begrenzten Poren oder Maschen ausgebildet. Die einzelnen Textilfasern begrenzen also die Maschen (z. B. im Falle von Geweben) oder Poren (z. B. im Falle von Vliesen). Dabei sollte das textile Flächengebilde eine mittlere Porengröße oder mittlere Maschenweite - je nach Art des Flächengebildes - von höchstens 200 µm, insbesondere höchstens 100 µm, vorzugsweise höchstens 75 µm, besonders bevorzugt höchstens 50 µm, ganz besonders bevorzugt höchstens 40 µm, noch mehr bevorzugt höchstens 10 µm, aufweisen. Auf diese Weise wird eine besonders gute Abscheiderate in bezug auf unschädlich zu machende Partikel und/oder Aerosole erreicht.

Wie die Anmelderin überraschenderweise herausgefunden hat, hängt die Leistungsfähigkeit der Partikel- und/oder Aerosolfilterschicht für den Fall, daß die Partikel- und/oder Aerosolfilterschicht ein aus Textilfasern bestehendes textiles Flächengebilde der vorgenannten Art mit durch die Textilfasern begrenzten Poren oder Maschen ist, entscheidend auch vom Verhältnis der mittleren Porengröße oder Maschenweite zum mittleren Durchmesser der Textil-fasern ab. Das Verhältnis bzw. der Quotient der mittleren Porengröße oder Maschenweite zum mittleren Durchmesser der Textilfasern variiert im Bereich von 10 bis 500, bevorzugt 10 bis 300, besonders bevorzugt 25 bis 250. Insbesondere sollte das Verhältnis bzw. der Quotient der mittleren Porengröße oder Maschenweite zum mittleren Durchmesser der Textilfasern höchstens 350, besonders bevorzugt höchstens 300, ganz besonders bevorzugt höchstens 250, betragen. Jedoch sollte das Verhältnis bzw. der Quotient der mittleren Porengröße oder Maschenweite zum mittleren Durchmesser der Textilfasern mindestens 10, ganz besonders bevorzugt mindestens 25, noch mehr bevorzugt mindestens 40, betragen. Auf diese Weise werden besonders effiziente Abscheideraten in bezug auf die unschädlich zu machenden Partikel und Aerosole erreicht.

Wie zuvor ausgeführt, ist die Partikel- und/oder Aerosolfilterschicht im allgemeinen ein aus Textilfasern bestehendes textiles Flächengebilde, vorzugsweise Vlies. Dabei werden als Textilfasern synthetische Fasern (synonym auch als Chemiefasern bezeichnet) eingesetzt, insbesondere solche Textilfasern, welche im Rahmen des Herstellungsverfahrens für das textile Flächengebilde, insbesondere im Rahmen des Meltblow-Verfahrens oder Elektrospinnens, verarbeitbar bzw. einsetzbar sind. Erfindungsgemäß geeignete Textilfasern, aus denen das die Partikel- und/oder Aerosolfilterschicht bildende textile Flächengebilde besteht, sind beispielsweise ausgewählt aus der Gruppe von Polyestern (PES); Polyolefinen, wie Polyethylen (PE), Polypropylen (PP), Polyoxyethylen und Polyoxypropylen; Polyvinylchloriden (CLF); Polyvinylidenchloriden (CLF); Acetaten (CA); Triacetaten (CTA); Polyacryl (PAN), insbesondere Polyacrylnitrilen; Polyamiden (PA); Polyvinylalkohol (PVAL); Polyurethanen; Polyvinylestern; Poly(meth-)acrylaten; Polyvinylidenfluoriden (PVDF); sowie deren Mischungen. Besonders bevorzugt sind Polyester, Polyolefine, Polyamide, Polyacrylnitrile, Poly(meth-)acrylate und Polyvinylidenfluoride (PVDF) sowie deren Mischungen. Die vorgenannten Kurzzeichen für die Textilfasern entstammen der DIN 60001-4 (August 1991).

Für weitergehende Einzelheiten zu dem Begriff der Textilfasern - synonym auch als textile Faserstoffe bezeichnet - kann beispielsweise verwiesen werden aufRömpp Chemielexikon, a.a.O., Seiten 4477 bis 4479, Stichwort: "Textilfasern". Insbesondere wird im Rahmen der vorliegenden Erfindung der Begriff der Textilfasern als eine Sammelbezeichnung für sämtliche Fasern, die sich textil verarbeiten lassen, verstanden; gemeinsam ist den Textilfasern eine im Vergleich zu ihrem Querschnitt große Länge sowie ausreichende Festigkeit und Biegsamkeit, wobei sich die Textilfasern nach Herkunft oder stofflicher Beschaffenheit in verschiedene Gruppen einteilen lassen. Im Rahmen der vorliegenden Erfindung ist der Begriff der Textilfasern sehr weit und umfassend zu verstehen und umfaßt nicht nur Fasern als solche, sondern auch faserartige Gebilde, wie z. B. Filamente oder dergleichen.

Gemäß einer erfindungsgemäß bevorzugten Ausführungsform ist die Abdeckschicht des erfindungsgemäßen Adsorptionsfiltermaterials als ein aus synthetischen Fasern (Chemiefasern) bestehendes textiles Flächengebilde, vorzugsweise ein luftdurchlässiges Textilmaterial, bevorzugt ein Gelege oder Textilverbundstoff, insbesondere ein Vlies (Non-Woven), ausgebildet ist, wobei die synthetischen Fasern (Chemiefasern) vorzugsweise aus der Gruppe von Polyamiden, Polyestern, Polyolefinen, Polyurethanen, Polyvinyl und/oder Polyacryl, bevorzugt Polyolefinen (insbesondere Polypropylen) und/oder Polyestern, ausgewählt sein können. In besonders bevorzugter Weise ist die Abdeckschicht als ein aus synthetischen Fasern (Chemiefasern) bestehendes Vlies (Non-Woven), insbesondere als ein Polyolefinvlies (z. B. Polypropylenvlies) oder Polyestervlies, ausgebildet ist.

Um eine effiziente Abscheiderate in bezug auf die unschädlich zu machenden Partikel und/oder Aerosole zu erreichen, sollte die Partikel- und/oder Aerosolfilterschicht einen mittleren Wirkungsgrad Eₘ nach DIN EN 779 (Juli 1993) von mindestens 40 %, insbesondere mindestens 50 %, vorzugsweise mindestens 70 %, besonders bevorzugt mindestens 90 %, ganz besonders bevorzugt mindestens 95 %, aufweisen. Weiterhin sollte die Partikel- und/oder Aerosolfilterschicht zu diesem Zweck einen mittleren Abscheidegrad Am nach DIN EN 779 (Juli 1993) von mindestens 50 %, insbesondere mindestens 70 %, vorzugsweise mindestens 90 %, besonders bevorzugt mindestens 95 %, ganz besonders bevorzugt mindestens 99 %, aufweisen.

Die DIN EN 779 vom Juli 1993 betrifft die Anforderungen, Prüfung und Kennzeichnung von Partikel-Luftfiltern für allgemeine Raumlufttechnik. Nach dieser Vorschrift wird der mittlere Abscheidegrad Am durch eine gravimetrische Prüfmethode bestimmt, wobei eine mehrmalige Bestaubung des Prüflings mit einer bekannten Menge eines standardisierten künstlichen Prüfstaubes in strömender Luft bis zum maximalen Enddruckverlust von 250 Pa erfolgt, wobei jeweils der Abscheidegrad aus den Massenverhältnissen durch Wägen eines dem Prüfling nachgeschalteten Schwebstoffilters bestimmt wird, wobei der mittlere Abscheidegrad Aₘ, berechnet aus allen Einzelmessungen, gilt; für weitergehende diesbezügliche Einzelheiten kann auf die DIN EN 779 verwiesen werden. Der mittlere Wirkungsgrad Eₘ dagegen wird nach DIN 779 mittels einer Verfärbungsprüfmethode durch mehrfache Messung des Wirkungsgrades gegenüber natürlichem atmosphärischem Staub in der Luft gemessen, wobei der Prüfling nach einer ersten Messung im Neuzustand mit einer bekannten Menge von standardisierten künstlichem Prüfstaub nach DIN EN 779 beladen und danach die Bestimmung des Wirkungsgrads erneut vorgenommen wird, bis ein Enddruckverlust von 450 Pa erreicht ist, wobei die Messung des Wirkungsgrades auf dem Vergleich jener Prüfluftvolumina beruht, die vor und nach dem Prüfling durch je ein weißes Schwebstoffilterpapier gesaugt werden müssen, bis diese gleich verfärbt bzw. getrübt sind, wobei der mittlere Wirkungsgrad Eₘ, berechnet aus allen Einzelmessungen, gilt; für weitere diesbezügliche Einzelheiten kann auf DIN EN 779 verwiesen werden.

Zu Zwecken der Erzielung einer guten Partikel- und Aerosolabscheidung sollte zudem der integrale Anfangsdurchlaßgrad Dᵢ der Partikel- und/oder Aerosolfilterschicht nach DIN EN 1822 (April 1989; DEHS-Aerosol (Diethylhexylsebacat), Most Penetrating Particle Size = MPPS 0,1 bis 0,3 µm) höchstens 50 %, insbesondere höchstens 40 %, vorzugsweise höchstens 30 %, besonders bevorzugt höchstens 20 %, ganz besonders bevorzugt höchstens 10 %, betragen. Die Prüfmethode gemäß DIN EN 1822 wird an unverschmutzten Prüflingen mit einem flüssigen Prüfaerosol (DEHS = Diethylhexylsebacat), basierend auf Meßwerten für jeweils einen dem Durchlaßgradmaximum entsprechenden Partikeldurchmesser (sogenannter MPPS, hier: 0,1 bis 0,3 µm), durchgeführt. In einem ersten Schritt der Untersuchung wird an flachen Mustern des Filtermedium jene Partikelgröße ermittelt, bei welcher das Durchlaßmaximum (MPPS) erreicht wird, wobei die nachfolgende Beurteilung und Klassierung der Filter nur noch für den MPPS erfolgt. In einem zweiten Schritt wird dann der über die Ausblasfläche ermittelte integrale Durchlaßgrad Dᵢ für den MPPS und der Druckverlust des Filters, beides beim Nennvolumenstrom, gemessen. Für weitergehende diesbezügliche Einzelheiten kann auf die DIN EN 1822 verwiesen werden.

Vorteilhafterweise ist die Partikel- und/oder Aerosolfilterschicht derart ausgebildet, daß sie bei einer Anströmgeschwindigkeit von 0,1 m/s eine mittlere Abscheiderate gegenüber Partikeln und/oder Aerosolen mit Durchmessern im Bereich von 0,1 bis 0,3 µm von mindestens 80 %, insbesondere mindestens 90 %, vorzugsweise mindestens 95 %, aufweist.

Weiterhin sollte die Partikel- und/oder Aerosolfilterschicht bei einer Anströmgeschwindigkeit von 0,1 m/s eine mittlere Abscheiderate gegenüber Partikeln und/oder Aerosolen mit Durchmessern ≥ 2 µm, insbesondere ≥ 1,5 µm, vorzugsweise ≥ 1,0 µm, von mindestens 95 %, insbesondere mindestens 98 %, bevorzugt mindestens 99 %, aufweisen.

Die Dicke der Partikel- und/oder Aerosolfilterschicht sollte im Bereich von 0,001 bis 10 mm, insbesondere 0,1 bis 5 mm, vorzugsweise 0,01 bis 1 mm, liegen.

Gemäß einer besonderen Ausführungsform kann die Partikel- und/oder Aerosolfilterschicht als ein sogenannter HEPA-Filter (High Efficiency Penetration oder Particulate Air) oder ULPA-Filter (Ultra Low Penetration oder Particulate Air) ausgebildet sein.

Um eine gute Gasdurchlässigkeit, insbesondere Luftdurchlässigkeit, des erfindungsgemäßen Adsorptionsfiltermaterials insgesamt und somit bei der Verarbeitung von ABC-Schutzanzügen einen hohen Tragekomfort zu gewährleisten, sollte die Partikel- und/oder Aerosolfilterschicht eine gute Gasdurchlässigkeit, insbesondere Luftdurchlässigkeit, aufweisen. Im allgemeinen sollte bei einem Strömungswiderstand von 127 Pa die Gasdurchlässigkeit, insbesondere Luftdurchlässigkeit, der Partikel- und/oder Aerosolfilterschicht mindestens 10 l·m⁻²·s⁻¹, insbesondere mindestens 30 l·m⁻²·s⁻¹, vorzugsweise mindestens 50 l·m⁻²·s⁻¹, besonders bevorzugt mindestens 100 l·m⁻²·s⁻¹, ganz besonders bevorzugt mindestens 400 l·m⁻²·s⁻¹, oder mehr, betragen.

Erfindungsgemäß ist die Adsorptionsschicht auf Basis von Aktivkohle ausgebildet, d. h. die adsorptionsfähige Schicht weist Aktivkohleteilchen

in Kornform ("Kornkohle") oder Kugelform ("Kugelkohle"), auf Der mittlere Durchmesser der Aktivkohleteilchen ist < 1,0 mm, vorzugsweise < 0,8 mm, bevorzugt < 0,6 mm. Dabei beträgt der mittlere Durchmesser der Aktivkohleteilchen mindestens 0,1 mm. Bei dieser Ausführungsform können die Aktivkohleteilchen in einer Menge (d. h. Beladungs- oder Auflagemenge) von 10 bis 500 g/m², insbesondere 25 bis 400 g/m², vorzugsweise 50 bis 300 g/m², bevorzugt 75 bis 250 g/m², besonders bevorzugt 80 bis 200 g/m², eingesetzt werden. Insbesondere werden solche Aktivkohleteilchen eingesetzt, die - bezogen auf ein einzelnes Aktivkohleteilchen, d.h. Aktivkohlekörnchen bzw. -kügelchen - einen Berstendruck von 5 Newton, insbesondere mindestens 10 Newton, und/oder bis zu 20 Newton aufweisen.

Gleichermaßen ist es möglich, für die Ausbildung der Adsorptionsschicht Aktivkohleteilchen einerseits und Aktivkohlefasern andererseits miteinander zu kombinieren.

Erfindungsgemäß ist es bevorzugt, wenn die zur Ausbildung der Adsorptionsschicht eingesetzte Aktivkohle (d. h. Aktivkohlepartikel oder Aktivkohlefasern) eine innere Oberfläche (BET) von mindestens 800 m²/g, insbesondere von mindestens 900 m²/g, vorzugsweise von mindestens 1.000 m²/g, bevorzugt im Bereich von 800 bis 2.500 m²/g, aufweist.

Zur Erhöhung der Adsorptionseffizienz bzw. Adsorptionsleistung, insbesondere zum Erhalt einer erhöhten bzw. verbesserten Schutzfunktion auch gegenüber biologischen Schadstoffen, insbesondere biologischen Kampfstoffen, besteht die Möglichkeit, die Adsorptionsschicht, insbesondere die Aktivkohleteilchen und/oder die Aktivkohlefasern, mit mindestens einem Katalysator zu imprägnieren. Erfindungsgemäß geeignete Katalysatoren sind beispielsweise Enzyme und/oder Metalle, vorzugsweise Metalle, insbesondere aus der Gruppe von Kupfer, Silber, Cadmium, Platin, Palladium, Rhodium, Zink, Quecksilber, Titan, Zirkonium und/oder Aluminium, bevorzugt in Form der entsprechenden Metallionen. Die Menge an Katalysator kann in weiten Bereichen variieren; im allgemeinen beträgt sie 0,05 bis 12 Gew.-%, vorzugsweise 1 bis 10 Gew.-%, besonders bevorzugt 2 bis 8 Gew.-%, bezogen auf das Gewicht der Adsorptionsschicht. Gegebenenfalls durch die Aerosol- und/oder Partikelfilterschicht durchgeschlagene biologische Schadstoffe können auf diese Weise wirksam unschädlich gemacht werden.

Wie zuvor beschrieben, ist die Adsorptionsschicht an der Trägerschicht fixiert bzw. befestigt. Die Befestigung der Adsorptionsschicht an der Trägerschicht mittels eines Klebstoffs, wobei der Klebstoff nur diskontinuierlich bzw. nur punktförmig auf die Trägerschicht aufgetragen ist, um eine gute Gasdurchlässigkeit, insbesondere Luftdurchlässigkeit, der Trägerschicht und auf diese Weise des Adsorptionsfiltermaterials insgesamt beizubehalten. Der Klebstoff sollte dabei in einer Auftragsmenge von 10 bis 80 g/m², insbesondere 20 bis 60 g/m², vorzugsweise 30 bis 50 g/m², aufgetragen sein. Der Klebstoffauftrag erfolgt derart, daß höchstens 25 % der Oberfläche der Trägerschicht, mit Klebstoff bedeckt ist. Im allgemeinen wird der Klebstoff in Form eines regelmäßigen oder unregelmäßigen Rasters in Form von Klebstoffpunkten auf die Trägerschicht aufgetragen bzw. aufgedruckt, wobei nachfolgend dann die Adsorptionsschicht (z. B. diskrete Aktivkohlepartikel) an den Klebstoffpunkten zum Haften gebracht wird.

Als Trägerschicht eignen sich grundsätzlich textile Flächengebilde, vorzugsweise luftdurchlässige Textilmaterialien. Bevorzugt sind textile Gewebe, Gewirke, Gestricke, Gelege oder Textilverbundstoffe, insbesondere Vliese. Im allgemeinen weist die Trägerschicht ein Flächengewicht von 20 bis 200 g/m², insbesondere 30 bis 150 g/m², bevorzugt 40 bis 120 g/m², auf.

Das erfindungsgemäße Adsorptionsfiltermaterial ist vorteilhafterweise mit einer Abdeckschicht an seiner Außenseite (d. h. also auf der der Adsorptionsschicht abgewandeten Seite der Partikel- und/oder Aerosolfilterschicht) ausgerüstet, welche vorteilhafterweise an der Partikel- und/oder Aerosolfilterschicht fixiert bzw. befestigt ist (z. B. mittels zumindest abschnittsweisem Laminieren oder Verkleben). Das Vorhandensein der Abdeckschicht führt zu einem verbesserten Verschleißschutz in bezug auf die Partikel- und/oder Aerosolfilterschicht, beispielsweise zu einer Verbesserung der Waschbeständigkeit, aber auch der Tragebeständigkeit des erfindungsgemäßen Materials.

Was die erfindungsgemäß optional vorgesehene Abdeckschicht anbelangt, so ist diese im allgemeinen gleichermaßen als ein textiles Flächengebilde, vorzugsweise ein luftdurchlässiges Textilmaterial, ausgebildet, z. B. als ein Gewebe, Gewirke, Gestricke, Gelege oder Textilverbundstoff, insbesondere ein Vlies. Im allgemeinen weist die Abdeckschicht ein Flächengewicht von 50 bis 300 g/m², insbesondere 75 bis 275 g/m², bevorzugt 100 bis 250 g/m², besonders bevorzugt 120 bis 250 g/m², auf.

Zur Verbesserung insbesondere des Aerosolschutzes kann die Abdeckschicht, insbesondere an ihrer Außenseite, oleophobiert und/oder hydrophobiert, vorzugsweise oleophobiert und hydrophobiert, ausgerüstet sein, vorzugsweise durch eine entsprechende Imprägnierung. Im Fall des Auftreffens größerer Tropfen von Schad- und Giftstoffen können sich diese infolge der Oleophobierung und/oder Hydrophobierung der Oberfläche der Abdeckschicht auf der Oberfläche des erfindungsgemäßen Adsorptionsfiltermaterials verteilen. Für diesen Zweck geeignete Oleo- bzw. Hydrophobierungsmittel sind dem Fachmann hinlänglich bekannt (z. B. Fluorpolymere, wie Fluorcarbonharze etc.).

Zur Verbesserung insbesondere des Aerosolschutzes und des Schutzes gegenüber biologischen Schadstoffen kann die Abdeckschicht und/oder die Trägerschicht, vorzugsweise die Trägerschicht, mit einer bioziden und/oder biostatischen Ausrüstung bzw. Ausstattung, vorzugsweise auf Basis einer katalytisch aktiven Komponente, versehen sein (vgl. die auf die Anmelderin selbst zurückgehende deutsche Patentanmeldung DE 10 2005 056 537 und deutsche Gebrauchsmusteranmeldung DE 20 2005 018 547; insbesondere bei Ausrüstung bzw. Ausstattung der als Träger für die Adsorptionsschicht dienenden, in Strömungsrichtung der Abdeckschicht und Aerosol-/Partikelfilterschicht nachgeschalteten Trägerschicht mit einer biozid bzw. biostatisch wirksamen katalytisch aktiven Komponente können in wirksamer Weise gegebenenfalls durch die vorteilhafterweise oleophobierte und/oder hydrophobierte Abdeckschicht und die in Strömungsrichtung nachgeschaltete Aerosol- und/oder Partikelfilterschicht durchgeschlagene biologische Schadstoffe unschädlich gemacht werden. Beispielsweise lassen sich auf diese Weise auch toxische Sporen unschädlich machen bzw. abtöten, und auch dem Problem einer etwaigen Reaerosolisation wird in effizienter Weise begegnet.

Die biozid bzw. biostatisch wirksame katalytisch aktive Komponente kann dabei insbesondere in die vorzugsweise als textiles Flächengebilde ausgebildete Abdeckschicht und/oder Trägerschicht, vorzugsweise nur in die Trägerschicht, eingearbeitet bzw. inkorporiert sein, insbesondere in die das Flächengebilde bildenden Fasern, Fäden, Garne, Filamente oder dergleichen, z. B. durch Einspinnen, Extrudieren, Imprägnierverfahren, chemische oder plasmachemische Behandlungsverfahren oder dergleichen. Als biozid bzw. biostatisch wirksame katalytisch aktive Komponente können insbesondere Metalle oder Metallverbindungen, insbesondere aus der Gruppe von Kupfer, Silber, Cadmium, Platin, Palladium, Rhodium, Zink, Quecksilber, Titan, Zirkonium und/oder Aluminium sowie deren Ionen und/oder Salzen, bevorzugt Kupfer und Silber sowie deren Ionen und/oder Salzen, besonders bevorzugt aus der Gruppe von Ag, Ag₂O, Cu, Cu₂O und CuO sowie deren Mischungen, eingesetzt werden. Die Menge an katalytisch aktiver Komponente, bezogen auf die Gesamtschicht, kann dabei im Bereich von 0,001 bis 20 Gew.-%, insbesondere 0,005 bis 10 Gew.-%, vorzugsweise 0,01 bis 5 Gew.-%, variieren. Erfindungsgemäß geeignete, mit einer biostatisch bzw. biozid wirkenden katalytisch aktiven Komponente beaufschlagte textile Flächengebilde, welche im Rahmen der vorliegenden Erfindung zum Einsatz kommen können, sind kommerziell erhältlich, z. B. von den Firmen Cupron Corporation, New York (USA), Foss Manufacturing Company Inc., Hampton, New Hampshire (USA) oder Noble Fiber Technologies, Clarks Summit, Pennsylvania (USA).

In gleicher Weise kann zur Verbesserung insbesondere des Aerosolschutzes und des Schutzes gegenüber biologischen Schadstoffen - alternativ oder aber auch kumulativ zur Abdeckschicht und/oder die Trägerschicht - auch die Aerosol- und/oder Partikelfilterschicht mit einer bioziden und/oder biostatischen Ausrüstung bzw. Ausstattung, vorzugsweise auf Basis einer katalytisch aktiven Komponente, versehen sein; hier gelten die obigen Ausführungen zur bioziden und/oder biostatischen Ausrüstung bzw. Ausstattung der Abdeckschicht und/oder die Trägerschicht entsprechend (vgl. auch die auf die Anmelderin selbst zurückgehende deutsche Patentanmeldung DE 10 2005 056 537 und deutsche Gebrauchsmusteranmeldung DE 20 2005 018 547. Die biozid bzw. biostatisch wirksame katalytisch aktive Komponente kann dabei insbesondere in die Aerosol- und/oder Partikelfilterschicht eingearbeitet bzw. inkorporiert sein, insbesondere in die die Aerosol- und/oder Partikelfilterschicht bildenden Fasern, Fäden, Garne, Filamente oder dergleichen, z. B. durch Einspinnen, Extrudieren, Imprägnierverfahren, chemische oder plasmachemische Behandlungsverfahren oder dergleichen. Als biozid bzw. biostatisch wirksame katalytisch aktive Komponente können insbesondere Metalle oder Metallverbindungen, insbesondere aus der Gruppe von Kupfer, Silber, Cadmium, Platin, Palladium, Rhodium, Zink, Quecksilber, Titan, Zirkonium und/oder Aluminium sowie deren Ionen und/oder Salzen, bevorzugt Kupfer und Silber sowie deren Ionen und/oder Salzen, besonders bevorzugt aus der Gruppe von Ag, Ag₂O, Cu, Cu₂O und CuO sowie deren Mischungen, eingesetzt werden. Die Menge an katalytisch aktiver Komponente, bezogen auf die Gesamtschicht, kann dabei im Bereich von 0,001 bis 20 Gew.-%, insbesondere 0,005 bis 10 Gew.-%, vorzugsweise 0,01 bis 5 Gew.-%, variieren.

Des weiteren kann die Abdeckschicht mit einem Flammschutz (z. B. mittels Phosphorsäureesterimprägnierung) ausgerüstet sein. Weiterhin kann die Abdeckschicht auch antistatisch ausgerüstet sein. Gemäß einer weiteren Ausführungsform kann die Abdeckschicht auch durch Infrarotreflexionseigenschaften (IR-Reflexionseigenschaften) ausgerüstet sein. Schließlich kann die Abdeckschicht an ihrer den Schadstoffen zugewandten Seite (d. h. im Gebrauchszustand auf der Außenseite) auch mit einer Tarnbedruckung, insbesondere bei der Herstellung von ABC-Schutzanzügen, versehen sein.

Im allgemeinen können die Trägerschicht und/oder die Abdeckschicht ein aus natürlichen und/oder synthetischen Fasern, vorzugsweise aus synthetischen Fasern (Chemiefasern), bestehendes textiles Flächengebilde sein. Für die Ausbildung der Abdeckschicht und/oder Trägerschicht geeignete synthetische Fasern bzw. Chemiefasern sind beispielsweise ausgewählt aus der Gruppe von Polyamiden, Polyestern, Polyolefinen (z. B. Polyethylenen oder Polypropylenen), Polyurethanen, Polyvinyl und/oder Polyacryl.

Gemäß einer erfindungsgemäß bevorzugten Ausführungsform kann speziell die Abdeckschicht als ein aus synthetischen Fasern (Chemiefasern) bestehendes textiles Flächengebilde, vorzugsweise ein luftdurchlässiges Textilmaterial, bevorzugt ein Gelege oder Textilverbundstoff, insbesondere ein Vlies (Non-Woven), ausgebildet sein. Dabei können die synthetischen Fasern (Chemiefasem) insbesondere aus der Gruppe von Polyamiden, Polyestern, Polyolefinen, Polyurethanen, Polyvinyl und/oder Polyacryl, bevorzugt Polyolefinen und/oder Polyestern, ausgewählt sein. Bevorzugt ist die Abdeckschicht als ein aus synthetischen Fasern (Chemiefasern) bestehendes Vlies (Non-Woven), insbesondere als ein Polyolefinvlies oder Polyestervlies, ausgebildet.

Neben den vorgenannten Schichten kann das erfindungsgemäße Adsorptionsfiltermaterial auch noch andere Schichten enthalten, insbesondere textile Lagen. Diese können oberhalb, unterhalb oder zwischen den vorgenannten Schichten angeordnet sein.

Wie zuvor beschrieben ist das erfindungsgemäße Adsorptionsfiltermaterial gasdurchlässig, insbesondere luftdurchlässig und/oder wasserdurchlässig und/oder wasserdampfdurchlässig ausgebildet. Hierdurch wird bei der Verarbeitung zu ABC-Schutzanzügen ein hervorragender Tragekomfort erreicht.

Im allgemeinen weist das erfindungsgemäße Adsorptionsfiltermaterial bei einem Strömungswiderstand von 127 Pa eine Gas- bzw. Luftdurchlässigkeit von mindestens 10 l•m⁻²•s⁻¹, insbesondere mindestens 30 l•m⁻²•s⁻¹, vorzugsweise mindestens 50 l•m⁻²•s⁻¹, besonders bevorzugt mindestens 100 l•m⁻²•s⁻¹, ganz besonders bevorzugt mindestens 400 l•m⁻²•s⁻¹, und/oder bis zu 10.000 l•m⁻²•s⁻¹ auf. Da die Gas- bzw. Luftdurchlässigkeit des Adsorptionsfiltermaterials nach der vorliegenden Erfindung zumindest im wesentlichen durch die Aerosol- und/oder Partikelfilterschicht bestimmt bzw. beschränkt, entspricht die Gas- bzw. Luftdurchlässigkeit das erfindungsgemäßen Adsorptionsfiltermaterials insgesamt im wesentlichen der Gas- bzw. Luftdurchlässigkeit der Aerosol- und/oder Partikelfilterschicht.

Im allgemeinen besitzt das erfindungsgemäße Adsorptionsfiltermaterial ein Gesamtflächengewicht von 200 bis 1.000 g/m², insbesondere 225 bis 800 g/m², vorzugsweise 250 bis 600 g/m², besonders bevorzugt 300 bis 500 g/m², insbesondere bei einer Gesamtquerschnittsdicke des erfindungsgemäßen Adsorptionsfiltermaterials von 0,1 bis 10 mm, insbesondere 0,2 bis 5 mm, bevorzugt 0,5 bis 3,0 mm.

Zur Erhöhung des Tragekomforts bei der Verarbeitung des erfindungsgemäßen Adsorptionsfiltermaterials zu ABC-Schutzbekleidung sollte das erfindungsgemäße Adsorptionsfiltermaterial eine Wasserdampfdurchgangsrate von mindestens 5 l/m² pro 24 h, insbesondere mindestens 10 l/m² pro 24 h, vorzugsweise mindestens 15 l/m² pro 24 h, besonders bevorzugt mindestens 20 l/m² pro 24 h, ganz besonders bevorzugt mindestens 25 l/m² pro 24 h, aufweisen. Die Wasserdampfdurchlässigkeit kann nach der sogenannten "Methode des umgekehrten Bechers" bzw. "Inverted Cup Method" nach ASTM E 96 und bei 25 °C gemessen werden. Zu weitergehenden Einzelheiten zur Messung der Wasserdampfdurchlässigkeit [Water Vapour Transmission Rate, WVTR] wird verwiesen auf McCullough et al. "A Comparison of Standard Methods for Measuring Water Vapour Permeability of Fabrics" in Meas. Sci. Technol. [Measurements Science and Technology], 14, 1402-1408, August 2003. Auf diese Weise wird ein guter Tragekomfort gewährleistet.

Um eine gute Schutzwirkung gegenüber chemischen Kampfstoffen zu gewährleisten, weist das erfindungsgemäße Adsorptionsfiltermaterial im allgemeinen eine Barrierewirkung gegenüber chemischen Kampfstoffen, insbesondere Bis[2-chlorethyl]sulfid (synonym auch als Senfgas, Lost oder Gelbkreuz bezeichnet), bestimmt nach Methode 2.2 der CRDEC-SP-84010, von höchstens 4 µg/cm² pro 24 h, insbesondere höchstens 3,5 µg/cm² pro 24 h, vorzugsweise höchstens 3,0 µg/cm² pro 24 h, besonders bevorzugt höchstens 2,5 µg/cm² pro 24 h, auf.

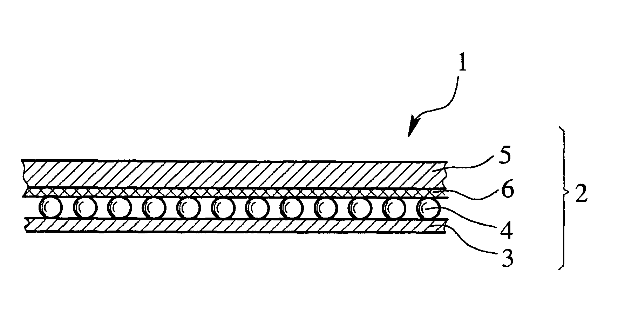

Weitere Vorteile, Eigenschaften, Aspekte und Merkmale der vorliegenden Erfindung ergeben sich aus der folgenden Beschreibung eines in der einzigen Figur dargestellten Ausführungsbeispiels. Es zeigt:
- Fig.: eine schematische Schnittdarstellung durch den Schichtaufbau eines erfindungsgemäßen Adsorptionsfiltermaterials gemäß einer Ausführungsform der vorliegenden Erfindung, wonach die Adsorptionsschicht aus diskreten Adsorberteilchen, insbesondere Aktivkohlepartikeln, gebildet ist.

Die einzige Figur zeigt eine schematische Schnittdarstellung durch den Schichtaufbau 2 eines erfindungsgemäßen Adsorptionsfiltermaterials 1 entsprechend einer speziellen Ausgestaltung der vorliegenden Erfindung. Das erfindungsgemäße Adsorptionsfiltermaterial 1 nach der vorliegenden Erfindung, welches sowohl mit einem integrierten Partikel- und/oder Aerosolschutz als auch mit einer Schutzfunktion gegenüber biologischen und/oder chemischen Schadstoffen, insbesondere biologischen und/oder chemischen Kampfstoffen, ausgestattet ist, weist einen mehrschichtigen Aufbau 2 mit einer Trägerschicht 3, einer der Trägerschicht 3 zugeordneten, vorzugsweise an der Trägerschicht 3 fixierten Adsorptionsschicht 4 und eine auf der der Trägerschicht 3 abgewandten Seite der Adsorptionsschicht 4 angeordnete Abdeckschicht 5 auf. Zusätzlich ist das Adsorptionsfiltermaterial 1 mit einer Partikel- und/oder Aerosolfilterschicht 6, vorzugsweise einer kombinierten Partikel- und Aerosolfilterschicht 6, ausgestattet. Ein solches Adsorptionsfiltermaterial 1 ist Gegenstand der deutschen Patentanmeldung EP 1825 899 A1.

Die Partikel- und/oder Aerosolfilterschicht 6 ist im allgemeinen unmittelbar auf der Adsorptionsschicht 4 angeordnet, insbesondere auf und/oder an der Adsorptionsschicht 4 fixiert, vorzugsweise hierauf laminiert. Die Partikel-und/oder Aerosolfilterschicht 6 ist somit also zwischen der Adsorptionsschicht 4 und der Abdeckschicht 5 angeordnet, wobei die Partikel- und/oder Aerosolfilterschicht 6 vorteilhafterweise auf und/oder an der Adsorptionsschicht 4 fixiert ist, vorzugsweise mittels Laminierung. Im Gebrauchszustand treten die unschädlich zu machenden Schadstoffe einschließlich Aerosolen und Partikeln nach Durchdringen der äußeren Abdeckschicht 5 also zunächst auf die Partikel- und/oder Aerosolfilterschicht 6, an der die betreffenden Schadstoffpartikel und Aerosole unschädlich gemacht werden, und der gegebenenfalls noch chemische und/oder biologische Schadstoffe enthaltende, von den Partikeln und Aerosolen befreite Schadstoffstrom trifft dann schließlich auf die Adsorptionsschicht 4, wo die verbleibenden Schadstoffe dann durch Adsorptionsprozesse und im Falle der Anwesenheit von Katalysatoren auch zusätzlich durch Zersetzungsprozesse unschädlich gemacht werden.

Im allgemeinen ist die Partikel- und/oder Aerosolfilterschicht 6 als ein Gelege oder Textilverbundstoff, insbesondere Vlies (Non-Woven), besonders bevorzugt als ein Vlies (Non-Woven), ausgebildet. Die Partikel- und/oder Aerosolfilterschicht 6 ist durch Elektrospinnen, Meltblow-Verfahren oder eine Kombination dieser beiden Verfahren hergestellt.

Für weitergehende diesbezügliche Einzelheiten zu dem erfindungsgemäßen Adsorptionsfiltermaterial 1 gemäß dem in der einzigen Figur dargestellten Ausführungsbeispiel kann zur Vermeidung unnötiger Wiederholungen auf die vorstehenden Ausführungen im allgemeinen Beschreibungsteil verwiesen werden, welche in bezug auf die Figurendarstellung entsprechend gelten.

Weiterer Gegenstand der vorliegenden Erfindung ist die Verwendung des erfindungsgemäßen Adsorptionsfiltermaterials, wie zuvor beschrieben, zur Herstellung von Schutzmaterialien aller Art (d. h. Schutzmaterialien sowohl mit integriertem Partikel- und/oder Aerosolschutz als auch mit Schutzfunktion gegenüber biologischen und/oder chemischen Schadstoffen, insbesondere biologischen und/oder chemischen Kampfstoffen), insbesondere von Schutzbekleidung, insbesondere für den zivilen oder militärischen Bereich, wie Schutzanzügen, Schutzhandschuhen, Schutzschuhwerk, Schutzsocken, Kopfschutzbekleidung und dergleichen, sowie von Schutzabdeckungen aller Art, wobei alle vorgenannten Schutzmaterialien vorzugsweise für den ABC-Einsatz bestimmt sind.

Weiterhin ist Gegenstand der vorliegenden Erfindung die Verwendung des erfindungsgemäßen Adsorptionsfiltermaterials, wie zuvor beschrieben, zur Herstellung von Filtern und Filtermaterialien aller Art, insbesondere zur Entfernung von Schad-, Geruchs- und Giftstoffen aller Art, insbesondere aus Luft-und/oder Gasströmen, wie ABC-Schutzmaskenfiltern, Geruchsfiltern, Flächenfiltem, Luftfiltern, insbesondere Filtern für die Raumluftreinigung, adsorptionsfähigen Trägerstrukturen und Filtern für den medizinischen Bereich. Für weitergehende Einzelheiten zu den zuvor beschriebenen erfindungsgemäßen Verwendungen und zu den zuvor beschriebenen erfindungsgemäßen Gegenständen kann Bezug genommen werden auf die obigen Ausführungen zu dem erfindungsgemäßen Adsorptionsfiltermaterial, welche in bezug auf die erfindungsgemäßen Verwendungen und die erfindungsgemäßen Gegenstände entsprechend gelten.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand des nachfolgenden Ausführungsbeispiels veranschaulicht, welches die vorliegende Erfindung jedoch keinesfalls beschränken soll.

### AUSFÜHRUNGSBEISPIEL:

Es wird ein erfindungsgemäßes Adsorptionsfiltermaterial mit integrierter Partikel- und Aerosolfilterschicht in Form eines Vliesstoffes hergestellt.

Zur Herstellung des Adsorptionsfiltermaterials wird eine textile Trägerschicht mit einem Flächengewicht von ca. 95 g/m² punktrasterförmig mit ca. 38 g/m² eines Klebstoffs bedruckt, an dem nachfolgend Aktivkohlekügelchen mit mittleren Durchmessern von ca. 0,4 mm in einer Auflagemenge von ca. 165 g/m² zum Haften gebracht werden. Nach Vernetzen und Aushärten des Klebstoffs kaschiert man auf die Adsorptionsschicht eine Partikel- und Aerosolfilterschicht in Form eines aus Polyamidfilamenten bzw. -fasern bestehendes Vlieses mit einem Faserdurchmesser von ca. 125 nm (Flächengewicht: ca. 15 g/m²; Porendurchmesser: ca. 25 µm; Luftdurchlässigkeit: ca. 380 l•m⁻²•s⁻¹ bei einem Strömungswiderstand von 127 Pa), welches im Elektrospinnverfahren hergestellt ist. Das Verhältnis der mittleren Porengröße des Vlieses zum mittleren Durchmesser der Textilfasern bzw. -filamente beträgt ca. 200.

Auf der Partikel- und Aerosolfilterschicht wird nachfolgend mittels eines Schmelzkleberwebs eine dem Verschleißschutz dienende, als Außenschicht fungierende Abdeckschicht befestigt, bei der es sich um ein luftdurchlässiges Polyolefinvlies (PO-Non-Woven) handelt (Flächengewicht: ca. 38 g/m²).

Nachfolgend wird die Barrierewirkung gegenüber Senfgas gemäß Methode 2.2 der CRDEC-SP-84010 im Rahmen des sogenannten konvektiven Strömungstests *(convective flow test)* bestimmt. Zu diesem Zweck läßt man bei konstantem Strömungswiderstand mit einer Strömungsgeschwindigkeit von ca. 0,45 cm/s einen Senfgas enthaltenden Luftstrom auf das Adsorptionsfiltermaterial einwirken und bestimmt die flächenbezogene Durchbruchmenge nach 16 Stunden (80 % relative Luftfeuchtigkeit, 32 °C). Die Durchbruchsmenge in bezug auf Senfgas liegt deutlich unterhalb von 3 µg/cm², so daß das Adsorptionsfiltermaterial eine gute Schutzwirkung gegenüber chemischen Kampfstoffen zeigt.

Nachfolgend wird an dem Adsorptionsfiltermaterial der mittlere Wirkungsgrad Eₘ nach DIN EN 779 (Juli 1993) und der mittlere Abscheidegrad Am nach DIN EN 779 (Juli 1993) bestimmt. Der mittlere Wirkungsgrad Eₘ nach DIN EN 779 liegt bei ca. 95 %, und der mittlere Abscheidegrad Am nach DIN EN 779 (Juli 1993) liegt bei ca. 98 %. Dies zeigt, daß das erfindungsgemäße Adsorptionsfiltermaterial einen guten Partikel- und Aerosolschutz aufweist.

Weiterhin wird an dem erfindungsgemäßen Adsorptionsfiltermaterial der integrale Anfangsdurchlaßgrad Dᵢ nach DIN EN 1822 (April 1998; DEHS-Aerosol, MPPS = 0,1 bis 0,3 µm) bestimmt. Der integrale Anfangsdurchlaßgrad Dᵢ liegt bei ca. 3 %.

Das erfindungsgemäße Adsorptionsfiltermaterial weist zudem gegenüber Partikeln und Aerosolen mit Durchmessern ≥ 1 µm eine Abscheiderate oberhalb von 98 % auf.

Das Adsorptionsfiltermaterial wird nachfolgend fünf Waschgängen unterzogen, und nachfolgend werden die vorgenannten Messungen wiederholt. Es werden gleiche Ergebnisse erhalten, d. h. das erfindungsgemäße Adsorptionsfiltermaterial ist verschleißbeständig und ist durch Waschen ohne weiteres regenerierbar, ohne daß die Effizienz beeinträchtigt wird.

## Patentansprüche

1. Adsorptionsfiltermaterial (1) mit integriertem Partikel- und/oder Aerosolschutz und mit Schutzfunktion gegenüber biologischen und/oder chemischen Schadstoffen, insbesondere biologischen und/oder chemischen Kampfstoffen, wobei das Adsorptionsfiltermaterial (1) einen mehrschichtigen Aufbau (2) aufweist, wobei der mehrschichtige Aufbau (2)
- eine Trägerschicht (3),
- eine der Trägerschicht (3) zugeordnete, an der Trägerschicht (3) fixierte Adsorptionsschicht (4),
wobei die Adsorptionsschicht (4) mittels eines Klebstoffs an der Trägerschicht (3) befestigt ist, wobei der Klebstoff diskontinuierlich auf die Trägerschicht (3) aufgetragen ist und wobei der Klebstoffauftrag derart erfolgt, daß höchstens 25 % der Oberfläche der Trägerschicht (3) mit Klebstoff bedeckt ist, und
wobei die Adsorptionsschicht diskrete Aktivkohleteilchen in Kornform oder Kugelform umfasst, wobei der mittlere Durchmesser der Aktivkohleteilchen mindestens 0,1 mm und weniger als 1,0 mm beträgt,
- eine auf der der Trägerschicht (3) abgewandten Seite der Adsorptionsschicht (4) angeordnete Abdeckschicht (5) und
- eine Partikel- und/oder Aerosolfilterschicht (6), vorzugsweise eine Partikel-und Aerosolfilterschicht (6),
umfaßt,
wobei die Partikel- und/oder Aerosolfilterschicht (6) als ein aus Textilfasern mit Faserdurchmessern im Bereich von 10 nm bis 1.000 nm bestehendes luftdurchlässiges textiles Flächengebilde mit einem Flächengewicht von 1 bis 15 g/m² und mit durch die Textilfasern begrenzten Poren und Maschen ausgebildet ist, wobei das Verhältnis der mittleren Porengröße oder Maschenweite zum mittleren Durchmesser der Textilfasern im Bereich von 10 bis 500 liegt und wobei das textile Flächengebilde durch Elektrospinnen, Meltblow-Verfahren oder eine Kombination dieser beiden Verfahren hergestellt ist.

2. Adsorptionsfiltermaterial nach Anspruch 1, **dadurch gekennzeichnet, daß** die Partikel- und/oder Aerosolfilterschicht (6) unmittelbar auf der Adsorptionsschicht (4) angeordnet, insbesondere auf und/oder an der Adsorptionsschicht (4) fixiert ist.

3. Adsorptionsfiltermaterial nach Anspruch 1 oder 2, **dadurch gekennzeichnet, daß** die Partikel- und/oder Aerosolfilterschicht (6) zwischen der Adsorptionsschicht (4) und der Abdeckschicht (5) angeordnet ist, insbesondere wobei die Partikel-und/oder Aerosolfilterschicht (6) auf und/oder an der Adsorptionsschicht (4) fixiert ist oder insbesondere wobei die Partikel- und/oder Aerosolfilterschicht (6) auf und/oder an der Abdeckschicht (5) oder auf und/oder an der Abdeckschicht (5) und der Adsorptionsschicht (4) fixiert ist.

4. Adsorptionsfiltermaterial nach einem der vorangehenden Ansprüche, **dadurch gekennzeichnet, daß** die Partikel- und/oder Aerosolfilterschicht (6) als ein Gelege oder Textilverbundstoff, insbesondere Vlies (Non-Woven), besonders bevorzugt als ein Vlies (Non-Woven), ausgebildet ist.

5. Adsorptionsfiltermaterial nach einem der vorangehenden Ansprüche, **dadurch gekennzeichnet, daß** das textile Flächengebilde eine mittlere Porengröße oder mittlere Maschenweite von höchstens 200 µm, insbesondere höchstens 100 µm, vorzugsweise höchstens 75 µm, besonders bevorzugt höchstens 50 µm, ganz besonders bevorzugt höchstens 40 µm, noch mehr bevorzugt höchstens 10 µm, aufweist.

6. Adsorptionsfiltermaterial nach einem der vorangehenden Ansprüche, **dadurch gekennzeichnet, daß** das Verhältnis der mittleren Porengröße oder Maschenweite zum mittleren Durchmesser der Textilfasern im Bereich von 10 bis 350, besonders bevorzugt 10 bis 300, ganz besonders bevorzugt 25 bis 250, liegt.

7. Adsorptionsfiltermaterial nach einem der vorangehenden Ansprüche, **dadurch gekennzeichnet, daß** als Textilfasern synthetische Fasern (Chemiefasern) eingesetzt werden.

8. Adsorptionsfiltermaterial nach Anspruch 7, **dadurch gekennzeichnet, daß** als synthetische Fasern (Chemiefasern) aus der Gruppe von Polyestern (PES); Polyolefinen, wie Polyethylen (PE), Polypropylen (PP), Polyoxyethylen und Polyoxypropylen; Polyvinychloriden (CLF); Polyvinylidenchloriden (CLF); Acetaten (CA); Triacetaten (CTA); Polyacryl (PAN), insbesondere Polyacrylnitrilen; Polyamiden (PA); Polyvinylalkohol (PVAL); Polyurethanen; Polyvinylestern; Poly(meth-)acrylaten; Polyvinylidenfluoriden (PVDF); sowie deren Mischungen, besonders bevorzugt Polyestern, Polyolefinen, Polyamiden, Polyacrylnitrilen, Poly(meth-)acrylaten und Polyvinylidenfluoriden (PVDF) sowie deren Mischungen, eingesetzt werden.

9. Adsorptionsfiltermaterial nach einem der vorangehenden Ansprüche, **dadurch gekennzeichnet, daß** die Partikel- und/oder Aerosolfilterschicht (6) einen mittleren Wirkungsgrad Eₘ nach DIN EN 779 (Juli 1993) von mindestens 40 %, insbesondere mindestens 50 %, vorzugsweise mindestens 70 %, besonders bevorzugt mindestens 90 %, ganz besonders bevorzugt mindestens 95 %, aufweist.

10. Adsorptionsfiltermaterial nach einem der vorangehenden Ansprüche, **dadurch gekennzeichnet, daß** die Partikel- und/oder Aerosolfilterschicht (6) einen mittleren Abscheidegrad Am nach DIN EN 779 (Juli 1993) von mindestens 50 %, insbesondere mindestens 70 %, vorzugsweise mindestens 90 %, besonders bevorzugt mindestens 95 %, ganz besonders bevorzugt mindestens 99 %, aufweist.

11. Adsorptionsfiltermaterial nach einem der vorangehenden Ansprüche, **dadurch gekennzeichnet, daß** die Partikel- und/oder Aerosolfilterschicht (6) einen integralen Anfangsdurchlaßgrad Dᵢ nach DIN EN 1822 (April 1998; DEHS-Aerosol, MPPS = 0,1 bis 0,3 µm) von höchstens 50 %, insbesondere höchstens 40 %, vorzugsweise höchstens 30 %, besonders bevorzugt höchstens 20 %, ganz besonders bevorzugt höchstens 10 %, aufweist.

12. Adsorptionsfiltermaterial nach einem der vorangehenden Ansprüche, **dadurch gekennzeichnet, daß** die Partikel- und/oder Aerosolfilterschicht (6) bei einer Anströmgeschwindigkeit von 0,1 m/s eine mittlere Abscheiderate gegenüber Partikeln und/oder Aerosolen mit Durchmessern im Bereich von 0,1 bis 0,3 µm von mindestens 80 %, insbesondere mindestens 90 %, vorzugsweise mindestens 95 %, aufweist und/oder daß die Partikel- und/oder Aerosolfilterschicht (6) bei einer Anströmgeschwindigkeit von 0,1 m/s eine mittlere Abscheiderate gegenüber Partikeln und/oder Aerosolen mit Durchmessern ≥ 2 µm, insbesondere ≥ 1,5 µm, vorzugsweise ≥ 1,0 µm, von mindestens 95 %, insbesondere mindestens 98 %, bevorzugt mindestens 99 %, aufweist.

13. Adsorptionsfiltermaterial nach einem der vorangehenden Ansprüche, **dadurch gekennzeichnet, daß** die Partikel- und/oder Aerosolfilterschicht (6) eine Dicke von 0,001 bis 10 mm, insbesondere 0,01 bis 5 mm, vorzugsweise 0,01 bis 1 mm, aufweist.

14. Verwendung eines Adsorptionsfiltermaterials nach einem der Ansprüche 1 bis 13 zur Herstellung von Schutzmaterialien aller Art, insbesondere von Schutzbekleidung, insbesondere für den zivilen oder militärischen Bereich.

15. Verwendung eines Adsorptionsfiltermaterials nach einem der Ansprüche 1 bis 13 zur Herstellung von Filtern und Filtermaterialien aller Art, insbesondere zur Entfernung von Schad-, Geruchs- und Giftstoffen aller Art, insbesondere aus Luft-und/oder Gasströmen.

## Claims

1. An adsorption filter material (1) with integrated particle and/or aerosol protection, and with a protective function against biological and/or chemical harmful substances, in particular biological and/or chemical warfare agents, wherein the adsorption filter material (1) has a multi-layered construction (2), wherein the multilayered construction (2) comprises
- a carrier layer (3),
- an adsorption layer (4) being assigned to the carrier layer (3), and being fixed on the carrier layer (3),
wherein the adsorption layer (4) is attached to the carrier layer (3) by means of an adhesive, wherein the adhesive is being applied discontinuously on the carrier layer (3), and wherein the adhesive application is carried out such that not more than 25% of the surface of the carrier layer (3) is covered with adhesive, and wherein the adsorption layer comprises discrete activated carbon particles in grain shape, or in spherical shape, wherein the mean diameter of the activated carbon particles is at least 0.1 mm, and less than 1.0,
- a cover layer (5) disposed on the side of the adsorption layer (4) that is opposite of the carrier layer (3), and
- a particle and/or aerosol filter layer (6), preferably a particle and aerosol filter layer (6),
wherein the particle and/or aerosol filter layer (6) is embodied as an air permeable textile fabric consisting of textile fibers having fiber diameters in the range of 10 nm to 1,000 nm, having a surface weight of 1 to 15 g/m², and having pores and stitches being limited by the textile fibers, wherein the ratio of the mean pore size, or of the stitch width, to the mean diameter of the textile fibers is in the range of 10 to 500, and wherein the textile fabric is produced by means of electronic spinning, melt blown method, or a combination of the two methods.

2. The adsorption filter material according to claim 1, **characterized in that** the particle and/or aerosol filter layer (6) is disposed directly on the adsorption layer (4), in particular fixed on and/or at the adsorption layer (4).

3. The adsorption filter material according to claims 1 or 2, **characterized in that** the particle and/or aerosol filter layer (6) is disposed between the adsorption layer (4) and the cover layer (5), in particular, wherein the particle and/or aerosol filter layer (6) is fixed on and/or at the adsorption layer (4), or in particular, wherein the particle and/or aerosol filter layer (6) is foxed on and/or at the cover layer (5), or on and/or at the cover layer (5) and the adsorption layer (4).

4. The adsorption filter material according to one of the previous claims, **characterized in that** the particle and/or aerosol filter layer (6) is embodied as a non-crimp fabric or a textile composite, in particular a non-woven, particularly preferred a non-woven.

5. The adsorption filter material according to one of the previous claims, **characterized in that** the textile fabric has a mean pore size, or a mean stitch width of not more than 200 µm, in particular not more than 100 µm, preferably not more than 75 µm, in particularly preferred not more than 50 µm, most preferred not more than 40 µm, however, most of all preferred not more than 10 µm.

6. The adsorption filter material according to one of the previous claims, **characterized in that** the ratio of the mean pore size, or the stitch width to the mean diameter of the textile fibers is in the range of 10 to 350, particularly preferred 10 to 300, particularly preferred 25 to 250.

7. The adsorption filter material according to one of the previous claims, **characterized in that** synthetic fibers (chemical fibers) are used as the textile fibers.

8. The adsorption filter material according to claim 7, **characterized in that** as synthetic fibers (chemical fibers), the following may be used from the group of polyesters (PES); polyolefins, such as polyethylene (PE), polypropylene (PP), polyoxyethylene, and polyoxy propylene; polyvinyl chlorides (CLF); polyvinylidene chlorides (CLF); acetates (CA); triacetates (CTA); polyacrylics (PAN); in particular polyacrylic nitriles; polyamides (PA); polyvinyl alcohol (PVAL); polyurethanes; polyvinyl esters; poly(meth-)acrylates; polyvinylidene fluorides (PVDF); as well as the mixtures thereof, particularly preferred polyesters, polyolefins, polyamides, polyacrylic nitriles, poly(meth-)acrylates, and polyvinylidene fluorides (PVDF), as well as the mixtures thereof.

9. The adsorption filter material according to one of the previous claims, **characterized in that** the particle and/or aerosol filter layer (6) has a mean degree of efficiency Eₘ according to DIN EN 779 (July 1993) of at least 40%, in particular at least 50%, preferably at least 70%, particularly preferred at least 90%, most particularly preferred 95%.

10. The adsorption filter material according to one of the previous claims, **characterized in that** the particle and/or aerosol filter layer (6) has a mean degree of separation Aₘ according to DIN EN 779 (July 1993) of at least 50%, in particular at least 70%, preferably at least 90%, particularly preferred at least 95%, most particularly preferred at least 99%.

11. The adsorption filter material according to one of the previous claims, **characterized in that** the particle and/or aerosol filter layer (6) has a degree of integral initial flow Dᵢ according to DIN EN 1822 (April 1998; DEHS aerosol, MPPS = 0.1 to 0.3 µm) of not more than 50%, in particular not more than 40%, preferably not more than 30%, particularly preferred not more than 20%, most particularly preferred not more than 10%.

12. The adsorption filter material according to one of the previous claims, **characterized in that** at an approach velocity of 0.1 m/s the particle and/or aerosol filter layer (6) has a mean separation rate as opposed to particles and/or aerosols with diameters in the range of 0.1 to 0.3 µm of at least 80%, in particular at least 90%, preferably at least 95%, and/or at an approach velocity of 0.1 m/s the particle and/or aerosol filter layer (6) has a mean separation rate as opposed to particles and/or aerosols with diameters ≥ 2 µm, in particular ≥ 1.5 µm, preferably ≥ 1.0 µm, of at least 95%, in particular at least 98%, preferably at least 99%.

13. The adsorption filter material according to one of the previous claims, **characterized in that** the particle and/or aerosol filter layer (6) has a thickness of 0.001 to 10 mm, in particular 0.01 to 5 mm, preferably 0.01 to 1 mm.

14. A use of the adsorption filter material according to one of the claims 1 to 13 for the production of protective materials of all types, in particular of protective clothing, in particular for the civilian or military areas.

15. The use of an adsorption filter material according to one of the claims 1 to 13 for the production of filters and or filter materials of all types, in particular for removing harmful, odorous, and toxic substances of all types, in particular from air and/or gas flows.

## Revendications

1. Matériau filtrant et adsorbant(1) avec protection intégrée contre les particules et/ou les aérosols et avec fonction de protection envers les substances nocives biologiques et/ou chimiques, en particulier envers des agents chimiques et/ou biologiques de combat, le matériau filtrant et adsorbant(1) présentant une structure multicouche (2), la structure multicouche (2) comprenant
- une couche support (3),
- une couche d'adsorption (4) affectée à la couche support (3), fixée sur la couche support (3),
sachant que la couche d'adsorption (4) est fixée à la couche support (3) au moyen d'une colle, la colle étant appliquée discontinûment sur la couche support (3) et l'application de la colle s'effectuant de telle sorte que 25 % au plus de la surface de la couche support (3) soient recouverts de la colle, et
sachant que la couche d'adsorption comprend des particules de charbon actif en forme de grains ou en forme de sphères, le diamètre moyen des particules de charbon actif étant d'au moins 0,1 mm et de moins de 1,0 mm,
- une couche de couverture (5) disposée du côté de la couche d'adsorption (4) opposé à la couche support (3) et
- une couche filtrante pour des particules et/ou des aérosols (6), de préférence une couche filtrante pour les particules et les aérosols (6),
la couche filtrante pour les particules et/ou les aérosols (6) étant formée comme un produit textile bidimensionnel perméable à l'air constitué de fibres textiles avec des diamètres de fibres dans l'intervalle de 10 nm à 1000 nm, d'un poids surfacique de 1 à 15 g/m² et avec des pores et des mailles délimités par les fibres textiles, le rapport de la taille moyenne des pores ou de la largeur moyenne des mailles au diamètre moyen des fibres textiles étant compris dans l'intervalle de 10 à 500 et le produit textile bidimensionnel étant fabriqué par filature électrostatique, par le procédé meltblow ou par une combinaison de ces deux procédés.

2. Matériau filtrant et adsorbant selon la revendication 1, **caractérisé en ce que** la couche filtrante pour les particules et/ou les aérosols (6) est disposée directement sur la couche d'adsorption (4), en particulier est fixée sur la couche d'adsorption (4) .

3. Matériau filtrant et adsorbant selon la revendication 1 ou 2, **caractérisé en ce que** la couche filtrante pour les particules et/ou les aérosols (6) est disposée entre la couche d'adsorption (4) et la couche de couverture (5), en particulier **en ce que** la couche filtrante pour les particules et/ou les aérosols (6) est fixée sur et/ou contre la couche d'adsorption (4) ou en particulier **en ce que** la couche filtrante pour les particules et/ou les aérosols (6) est fixée sur et/ou contre la couche de couverture (5) ou sur et/ou contre la couche de couverture (5) et la couche d'adsorption (4).

4. Matériau filtrant et adsorbant selon l'une quelconque des revendications précédentes, **caractérisé en ce que** la couche filtrante pour les particules et/ou les aérosols (6) est configurée comme un matériau composite à fibres juxtaposées ou textiles, en particulier à non tissé, de façon particulièrement préférée comme un non tissé.

5. Matériau filtrant et adsorbant selon l'une quelconque des revendications précédentes, **caractérisé en ce que** le produit textile bidimensionnel présente une taille de pore moyenne ou une largeur de maille moyenne de 200 µm au plus, en particulier de 100 µm au plus, de préférence de 75 µm au plus, plus préférablement de 50 µm au plus, encore plus préférablement de 40 µm au plus, de façon particulièrement préférée de 10 µm au plus.

6. Matériau filtrant et adsorbant selon l'une quelconque des revendications précédentes, **caractérisé en ce que** le rapport de la taille moyenne des pores ou de la largeur de maille au diamètre moyen des fibres textiles est situé dans l'intervalle de 10 à 350, encore plus préférablement de 10 à 300, de façon particulièrement préférée de 25 à 250.

7. Matériau filtrant et adsorbant selon l'une quelconque des revendications précédentes, **caractérisé en ce que** l'on utilise comme fibres textiles des fibres synthétiques (fibres chimiques).

8. Matériau filtrant et adsorbant selon la revendication 7, **caractérisé en ce que** comme fibres synthétiques (fibres chimiques) sont utilisées des fibres du groupe des polyesters (PES); des polyoléfines comme le polyéthylène (PE), le polypropylène (PP), le polyoxyéthylène, le polyoxypropylène; les chlorures de polyvinyle (CLF); les chlorures de polyvinylidène (CLF); les acétates (CA); les triacétates (CTA); les polyacryles (PAN), en particulier les polyacrylonitriles; les polyamides (PA); l'alcool polyvinylique (PVAL); les polyuréthanes; les esters de polyvinyle; les poly(méth)acrylates; les fluorures de polyvinylidène (PVDF); ainsi que leurs mélanges, de façon particulièrement préférée les polyesters, les polyoléfines, les polyamides, les polyacrylonitriles, les poly(méth)acrylates et les fluorures de polyvinylidène (PVDF), ainsi que leurs mélanges.

9. Matériau filtrant et adsorbant selon l'une quelconque des revendications précédentes, **caractérisé en ce que** la couche filtrante pour les particules et/ou les aérosols (6) présente un rendement moyen Eₘ selon DIN EN 779 (juillet 1993) d'au moins 40 %, en particulier d'au moins 50 %, de préférence d'au moins 70 %, encore plus préférablement d'au moins 90 %, de façon particulièrement préférée d'au moins 95 %.

10. Matériau filtrant et adsorbant selon l'une quelconque des revendications précédentes, **caractérisé en ce que** la couche filtrante pour les particules et/ou les aérosols (6) présente un degré moyen de séparation Aₘ selon DIN EN 779 (juillet 1993) d'au moins 50 %, en particulier d'au moins 70 %, de préférence d'au moins 90 %, encore plus préférablement d'au moins 95 %, de façon particulièrement préférée d'au moins 99 %.

11. Matériau filtrant et adsorbant selon l'une quelconque des revendications précédentes, **caractérisé en ce que** la couche filtrante pour les particules et/ou les aérosols (6) présente un degré de perméabilité intégral initial Dᵢ selon DIN EN 1822 (avril 1998 ; aérosol DEHS, MPPS = 0,1 à 0,3 µm) d'au plus 50 %, en particulier d'au plus 40 %, de préférence d'au plus 30 %, encore plus préférablement d'au plus 20 %, de façon particulièrement préférée d'au plus 10 %.

12. Matériau filtrant et adsorbant selon l'une quelconque des revendications précédentes, **caractérisé en ce que** la couche filtrante pour les particules et/ou les aérosols (6) présente pour une vitesse d'incidence de l'écoulement de 0,1 m/s pour des particules et/ou des aérosols dont les diamètres sont dans l'intervalle de 0,1 à 0,3 µm un taux de séparation moyen d'au moins 80 %, en particulier d'au moins 90%, de préférence d'au moins 95 %, et/ou **en ce que** la couche filtrante pour les particules et/ou les aérosols (6) présente pour une vitesse d'incidence de l'écoulement de 0,1 m/s pour des particules et/ou des aérosols dont les diamètres sont ≥ 2 µm, en particulier ≥ 1,5 µm, de préférence ≥ 1,0 µm un taux de séparation moyen d'au moins 95 %, en particulier d'au moins 98%, de préférence d'au moins 99 %.

13. Matériau filtrant et adsorbant selon l'une quelconque des revendications précédentes, **caractérisé en ce que** la couche filtrante pour les particules et/ou les aérosols (6) présente une épaisseur de 0,001 à 10 mm, en particulier de 0,01 à 5 mm, de préférence de 0,01 à 1 mm.

14. Utilisation d'un matériau filtrant et adsorbant selon l'une quelconque des revendications 1 à 13 à la fabrication de matériaux de protection de toute sorte, en particulier de vêtements de protection pour le secteur civil et militaire.

15. Utilisation d'un matériau filtrant et adsorbant selon l'une quelconque des revendications 1 à 13 à la fabrication de filtres et de matériaux filtrants de toute sorte, en particulier pour l'élimination d'éléments polluants, d'odeurs et de substances toxiques de toute sorte, en particulier depuis des écoulements d'air et/ou de gaz.
